# EUROPÄISCHE PATENTSCHRIFT

(11) **EP 0 615 083 B1**
(45) Veröffentlichungstag und Bekanntmachung des Hinweises auf die Patenterteilung: **22.04.1998**
(21) Anmeldenummer: 94102509.0
(22) Anmeldetag: 19.02.1994
(51) Int. Cl.: F16J 13/02, B65G 69/18

(54) **Sicherheitsschliessvorrichtung für Behälteröffnungen**
Safety cut-out for container port
Dispositif de fermeture de sécurité pour l'orifice d'un récipient

(30) Priorität: 09.03.1993 DE 4307346
(43) Veröffentlichungstag der Anmeldung: 14.09.1994
(73) Patentinhaber: Gebr. Lödige Maschinenbau Gesellschaft mbH, D-33102 Paderborn (DE)
(72) Erfinder: Grob, Armin, D-33102 Paderborn (DE); Schmidt, Alfons, D-33129 Delbrück-Bentfield (DE)
(74) Vertreter: Türk, Gille, Hrabal, Leifert

(56) Entgegenhaltungen:
- DE-C- 661 116

## Beschreibung

Die Erfindung betrifft eine Sicherheitsschließvorrichtung zum Abdichten von Behälteröffnungen, beispielsweise Ein- oder Auslauföffnungen von Mischer- oder Reaktorbehältern, welche die Merkmale des Oberbegriffes des Anspruches 1 aufweist.

Bei der Verarbeitung von Flüssigkeiten und Feststoffen in einem geschlossenen Behälter, beispielsweise eines Reaktors oder Mischers, ist es für bestimmte Prozesse erforderlich, während der Behandlung der Güter den Prozeßraum unter Druck, Unterdruck oder gar Hochvakuum zu halten. Um derartige Betriebsbedingungen zu gewährleisten, ist es erforderlich, an den Ein- und Austrittsöffnungen des Behälters als Dichtungen dienende Schließvorrichtungen vorzusehen, um diese Öffnungen den jeweiligen Prozeßbedingungen entsprechend dicht verschließen zu können.

Die Ausgestaltung der Dichtungen solcher Schließvorrichtungen richtet sich in der Regel nach produkt- und verfahrensspezifischen Kriterien. Bei derartigen Schließvorrichtungen ist es für die Praxis erforderlich, daß die Dichtstellen gegen Kontakt mit den verarbeiteten Flüssigkeiten und/oder Feststoffen speziell geschützt werden, damit eine dauernde und praktisch vakuumfreie Dichtfunktion gewährleistet ist.

Zum Überladen von staubendem Schüttgut, beispielsweise Grude, Schwelkoks und dergleichen, aus einem Bunker in staub- und gasdicht verschließbare Großraumkübel oder Wagen ist eine Vorrichtung mit einem am Bunker fest angeordneten, den Bunkerverschluß umschließenden Fallrohr und einem darauf verschiebbaren zweiten Schieberrohr, auf welchem wiederum ein Dichtungsflansch verschiebbar angeordnet ist, bekannt (DE-C-661 116). Diese Vorrichtung entspricht dem Oberbegriff des Anspruchs 1.

Der Erfindung liegt die Aufgabe zugrunde, eine Sicherheitsschließvorrichtung zum dichten Verschließen von Behälteröffnungen zu schaffen, die gewährleistet, daß ihre Dichtungen bzw. Dichtelemente nicht von dem im Behälter behandelten Material angegriffen und damit auf die Dauer unwirksam gemacht werden können.

Diese Aufgabe wird erfindungsgemäß mit einer Sicherheitsschließvorrichtung gelöst, welche die Merkmale des Patentanspruches 1 aufweist. Vorteilhafte Ausgestaltungen der Erfindung sind Gegenstand der Unteransprüche.

Mit der erfindungsgemäßen Sicherheitsschließvorrichtung ist gewährleistet, daß das in den als Prozeßraum dienenden Behälter eingefüllte und aus dem Behälter entnommene Gut an den eigentlichen Dichtflächen der Dichtsysteme der Schließvorrichtung vorbeigeführt wird und mit den Dichtflächen nicht in Kontakt gelangt oder gelangen kann. Beim Einschleusen und Ausschleusen von Material in den bzw. aus dem Behälter ergeben sich keine Bewegungen der Schließmechanismen, die eine Abdichtung aus dem Innenraum der Schleuse nach außen erforderlich machen würden.

Beispielsweise ist an der Auslauföffnung eines Behälters unterhalb einer produktseitigen Dichtung ein weiteres Dichtungssystem angeordnet. Ein Verschlußschieber ist gegenüber dem Auslaufstutzen des Behälters pendelnd aufgehängt, und zwar über Faltenbälge. Es kann eine Hubbewegung über entsprechend angeordnete hydraulische oder pneumatische Zylinder ausgeführt werden. Dabei erfolgt eine Bewegung relativ zu einem feststehenden inneren Rohr des Auslaufstutzens des Behälters. Diese Bewegung wird ausgeführt, nachdem eine Schieberplatte eine horizontale oder seitliche Bewegung ausgeführt hat. Der innere Stutzen, welcher am Schiebergehäuse angeflanscht ist, bewegt sich mit und stößt mit seiner Dichtkante gegen den Auslaufstutzen des Behälters. Somit ist die Dichtfläche des Schiebers vollständig gekapselt und gegen anschließenden Anstrom des Produktes während des Entleerungsvorganges geschützt.

In der Zeichnung sind zwei Ausführungsbeispiele einer erfindungsgemäßen Sicherheitsschließvorrichtung schematisch dargestellt, und zwar zeigt
- Fig. 1: einen senkrechten Schnitt einer ersten Ausführungsform der Sicherheitsschließvorrichtung,
- Fig. 2: eine Einzelheit aus Fig. 1 in gegenüber Fig. 1 vergrößertem Maßstab,
- Fig. 3: einen senkrechten Schnitt einer zweiten Ausführungsform der Sicherheitsschließvorrichtung und
- Fig. 4: eine im Maßstab vergrößerte Einzelheit A der Sicherheitsschließvorrichtung aus Fig. 3.

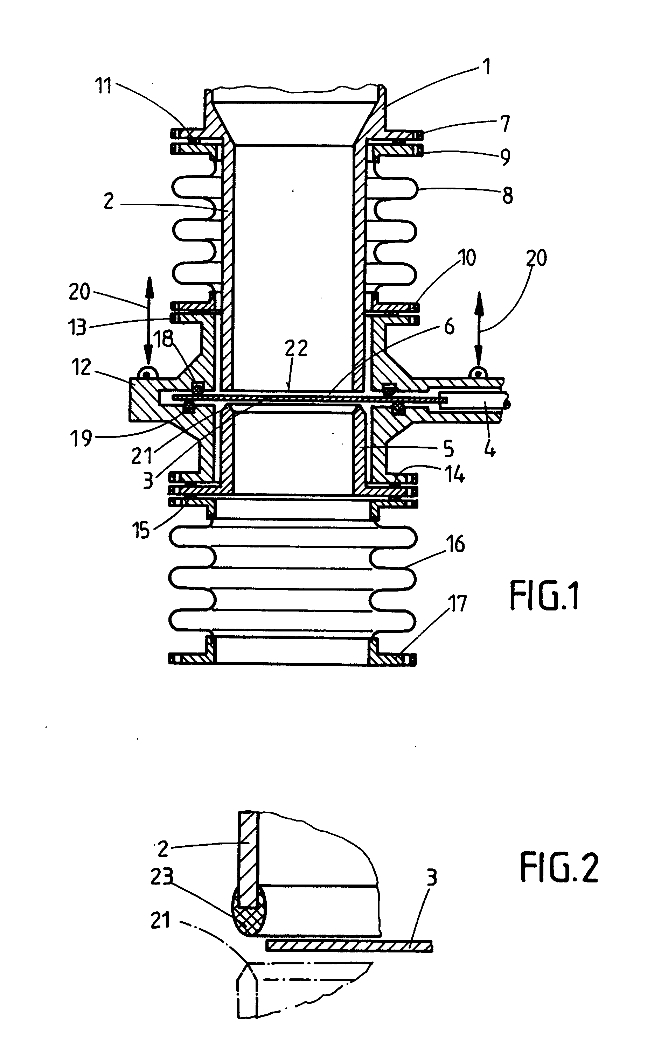

Der druck- oder luftdicht verschließbare Behälter eines nicht gezeigten Reaktors oder Mischers ist an seinem Auslauf mit einem der Entleerung dienenden Stutzen 1 versehen, welcher gemäß Fig. 1 senkrecht verläuft. Ein ähnlicher Stutzen kann an der Beschickungsöffnung des Behälters vorgesehen sein.

Der Stutzen 1 ist an seinem oberen Ende trichterförmig ausgebildet und hat an seinem unteren Ende einen Rohrabschnitt 2, der sich bis zu einem horizontal angeordneten und auch in horizontaler Ebene verstellbaren Verschlußschieber 3 erstreckt. Der Verschlußschieber 3 ist plattenförmig ausgebildet und am äußeren Ende einer Kolbenstange 4 eines nicht dargestellten Zylinderantriebes befestigt, um sie aus der in Fig. 1 gezeigten Schließposition und damit aus dem Bereich des Rohrabschnittes 2 herausfahren bzw. in diese Position einfahren zu können.

Unterhalb des Verschlußschiebers 3 ist ein rohrförmiger Stutzen 5 vorgesehen, der sozusagen eine Verlängerung des Rohrabschnittes 2 des Stutzens 1 unterhalb des Bereiches des Verschlußschiebers 3 bildet. Zwischen dem Rohrabschnitt 2 und dem rohrförmigen Stutzen 5 befindet sich ein horizontaler Schlitz 6, in dem der Verschlußschieber 3 bewegt werden kann.

Der Stutzen 1 ist nahe der Öffnung des Behälters, an der er angebracht ist, mit einem umlaufenden horizontalen und radialen Flansch 7 versehen, der zum Anbringen eines in Längsrichtung dehnbaren Faltenbalges 8 dient. Der Faltenbalg 8 ist an beiden Enden mit jeweils einem radialen Flansch 9 bzw. 10 versehen, wobei der obere Flansch 9 am Flansch 7 des Stutzens 1 undrehbar zu befestigen ist. Zwischen den beiden Flanschen 7 und 9 ist ein abdichtender Lagerring 11 angeordnet.

Im Bereich des Schlitzes 6 ist auf der Außenseite des Rohrabschnittes 2 und des diesen in axialer Richtung verlängernden rohrförmigen Stutzens 5 ein rohrförmiges Gehäuse 12 angeordnet, das am oberen Ende einen radialen flansch 13 und am unteren Ende einen weiteren radialen Flansch 14 aufweist, die sich beide nach außen erstrecken.

Der obere radiale Flansch 13 des Gehäuses 12 ist am unteren radialen Flansch 10 des Faltenbalges 8 befestigt. Am unteren radialen Flansch 14 ist ein oberer radialer Flansch 15 eines weiteren, in axialer Richtung oder Längsrichtung dehnbaren Faltenbalges 16 befestigt.

Der Faltenbalg 16 weist am entgegengesetzten oder unteren Ende einen weiteren radialen Flansch 17 auf, der an einem nicht dargestellten weiteren Flansch oder Stutzen einer ebenfalls nicht dargestellten Ableiteinrichtung befestigt werden kann.

Im Gehäuse 12 sind innerhalb des radialen und horizontalen Schlitzes 6 eine obere ringförmige Dichtung 18 und eine untere ringförmige Dichtung 19 in das Gehäuse 12 eingelassen, welche mit der Oberseite bzw. der Unterseite des Verschlußschiebers 3 zusammenwirken. Die obere ringförmige Dichtung 18 hat beim dargestellten Ausführungsbeispiel einen geringeren Durchmesser als die untere ringförmige Dichtung 19, so daß diese Dichtungen radial zueinander versetzt an der oberen bzw. unteren Fläche des Verschlußschiebers 3 anliegen, wenn sich dieser in der in Fig. 1 dargestellten Position befindet.

Die Dichtungen 18 und 19 sorgen in Verbindung mit dem zwischen sie eingeschobenen plattenförmigen Verschlußschieber 3 für eine hermetische Abdichtung außerhalb der in der Zeichnung nicht dargestellten Verschlußklappe des ebenfalls in der Zeichnung nicht dargestellten Behälters eines Mischers oder Reaktors. Diese Dichtungen 18 und 19 müssen beim Entleeren, ebenso wie beim Beschicken, des Behälters gegen Einwirkung des entleerten bzw. aufgegebenen oder beschickten Schüttgutes, das staubförmig sein kann, wirksam geschützt werden. Dies ist eines der wichtigsten Ziele der vorliegenden Erfindung.

Um dies zu erreichen, ist das Gehäuse 12 über senkrecht verstellbare hydraulische oder pneumatische Zylinder, welche durch Doppelpfeile 20 angedeutet sind, senkrecht verstellbar. Zum Entleerungs- ebenso wie zum Beschickungsvorgang wird der Verschlußschieber 3 aus der in Fig. 1 gezeigten Position nach rechts so weit zurückgezogen, bis er außerhalb des Grundrisses des Rohrabschnittes 2 bzw. des rohrförmigen Stutzens 5 liegt. Dann kann das Gehäuse 12 mittels der durch die Doppelpfeile 20 angedeuteten pneumatischen und hydraulischen Zylinder angehoben werden, bis der am unteren Ende des Gehäuses 12 befestigte rohrförmige Stutzen 5 mit seiner schneidenförmig ausgebildeten Oberkante 21 sich dichtend gegen die flach ausgebildete Unterkante 22 des Rohrabschnittes 2 legt. Dann ist der durch den Rohrabschnitt 2 und den rohrförmigen Stutzen 5 seitlich begrenzte Auslaß für das aus dem Behälter kommende Behandlungsgut seitlich derart abgedichtet, daß dieses Gut die Dichtungen 18 und 19 nicht beaufschlagen und damit beeinträchtigen kann.

Fig. 2 zeigt, daß an der Unterkante des Rohrabschnittes 2 eine umlaufende Dichtung 23 aufgesteckt sein kann, welche aus Kunststoff wie PTFE besteht und eine gewisse Elastizität aufweist. Dadurch wird die Dichtwirkung mit der schneidenförmigen Oberkante 21 des rohrförmigen Stutzens 5 in der Schließstellung verbessert, ebenso aber die Möglichkeit eröffnet, eine wirksame Abdichtung gegenüber den ringförmigen Dichtungen 18 und 19 auch dann zu erzielen, wenn der Verschlußschieber 3 nicht aus seiner normalen Schließ- und Dichtposition zurückgezogen wurde, weil seine Oberseite unter Einwirkung der vom Doppelpfeil 20 angedeuteten Zylinder dichtend gegen das untere Ende des Rohrabschnittes 2 gedrückt werden kann und der rohrförmige Stutzen 5 sich außerdem dichtend gegen die Unterseite des plattenförmigen Verschlußschiebers 3 legen bzw. ziehen läßt.

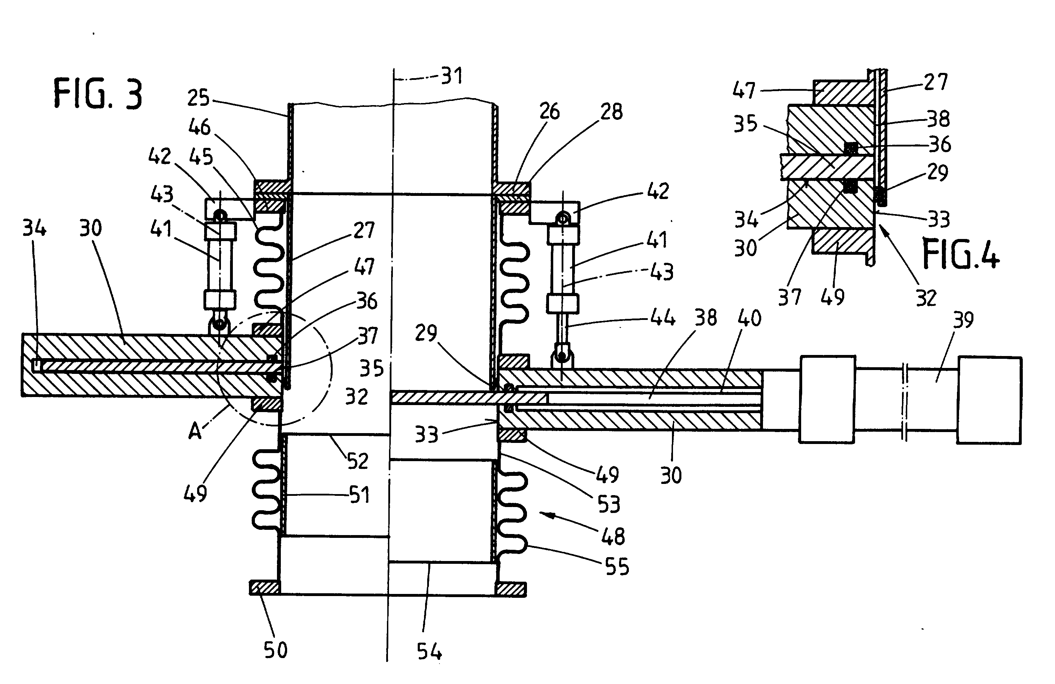

Bei der in Fig. 3 und 4 gezeigten Ausführungsform der Sicherheitsschließvorrichtung ist an dem nicht dargestellten Auslaß des Behälters eines ebenfalls nicht dargestellten Mischers oder Reaktors ein rohrförmiger Stutzen 25 angebaut, der am unteren Ende einen radialen Flansch 26 aufweist. In Verlängerung des rohrförmigen Stutzens 25 ist an das untere Ende desselben ein Rohrabschnitt 27 angesetzt, dessen Innendurchmesser dem Innendurchmesser des Stutzens 25 entspricht. Der Rohrabschnitt 27 weist am oberen Ende einen radialen Flansch 28 auf, der sich gegen die Unterseite des radialen Flansches 26 des Stutzens 25 legt und somit die gewünschte Verbindung zwischen Stutzen 25 und Rohrabschnitt 27 herstellt. Am unteren Ende ist der Rohrabschnitt 27 mit einem radial nach außen vorstehenden umlaufenden Dichtungsring 29 versehen, wie insbesondere Fig. 4 zeigt.

Auf der Außenseite des Rohrabschnittes 27 ist ein scheibenförmiges Gehäuse 30 angeordnet, das relativ zum Rohrabschnitt 27 in Richtung der Längsachse 31 desselben verschoben werden kann und das eine zentrale Öffnung 32 enthält, deren Durchmesser etwas größer als der Außendurchmesser des Rohrabschnittes 27 ist, so daß der am unteren Ende des Rohrabschnittes 27 vorgesehene Dichtungsring sich dichtend gegen die Wand 33 der zentralen Öffnung 32 legt, wie deutlich aus Fig. 4 zu erkennen ist.

Im Gehäuse 30 ist innerhalb eines horizontalen Schlitzes 34 ein plattenförmiger Verschlußschieber 35 in etwa horizontaler Richtung verschiebbar angeordnet. Dieser Verschlußschieber ist innerhalb des Schlitzes 34 in der Nähe der zentralen Öffnung 32 des Gehäuses 30 mittels die Öffnung 32 umschließenden Dichtungsringen 36 und 37 hermetisch abgedichtet.

Am - in Fig. 3 gesehen - rechten Ende des plattenförmigen Verschlußschiebers 35 enthält dieser eine durchgehende und im Grundriß kreisförmige Öffnung 38, die in ihrer Größe der zentralen Öffnung 32 des Gehäuses 30 entspricht, so daß, wenn der der Verschlußschieber 35 in die am weitesten nach links gerückte Stellung verschoben ist, sich die Öffnung 38 in der Öffnung 32 des Gehäuses 30 befindet und somit das untere Ende des Rohrabschnittes 27 durch die Öffnung 38 hindurchgeschoben werden kann.

Zum horizontalen Verstellen des Verschlußschiebers 35 ist ein zweiseitig beaufschlagbarer hydraulischer oder pneumatischer Zylinder 39 am Gehäuse 30 befestigt, dessen hier nicht dargestellte Kolbenstange mit dem Verschlußschieber 35 verbunden ist. Wie Fig. 3 zeigt, kann die Kolbenstange des Zylinders 39 in eine Öffnung 40 des Gehäusess 30 eingefahren werden, die ausreichend tief ist, damit die Kolbenstange nicht in den zur Führung dienenden horizontalenb Schlitz 34 eingefahren werden muß, wenn der Verschlußschieber 35 in die am weitesten links (Fig. 3 links und Fig. 4) liegende Position verschoben wird.

Um das Gehäuse 30 relativ zum Rohrabschnitt 27 verschieben zu können, ist das Gehäuse 30 über doppelseitig beaufschlagbare hydraulische oder pneumatische Zylinder 41 an Konsolen 42 aufgehängt, wobei die Konsolen 42 in fester Relation zum radialen Flansch 26 des Stutzens 25 angeordnet sind und sich die Zylinder 41 mit ihrer Längsachse 43 in senkrechter Position verlaufend installiert sind. Dabei ist das Gehäuse 30 in Fig. 3 im rechten Abschnitt abgesenkt dargestellt, so daß die Kolbenstange 44 des entsprechenden Zylinders 41 ausgefahren ist, während sich das Gehäuse 30 im linken Teil der Fig. 3 in seiner höchsten Position befindet, bei der die Kolbenstange des Zylinders 41 ganz eingezogen ist.

Zwischen dem radialen Flansch 26 des Stutzens 25 und dem Gehäuse 30 ist ein den Rohrabschnitt 27 umschließender Faltenbalg 45 vorgesehen, der mit einem oberen Flansch 46 am radialen Flansch 26 des Stutzens 25 und mit einem unteren radialen Flansch 47 auf dem Gehäuse 30 befestigt ist. Der Faltenbalg 45 ist in Längsrichtung bzw. koaxial zur Längsachse 31 dehnbar und zusammendrückbar, um eine den Bewegungen des verstellbaren Gehäuses 30 folgende Abschirmung um den Rohrabschnitt 27 zu bilden. Der Faltenbalg 45 kann dabei aus Metallblech geformt sein.

An der Unterseite des Gehäuses 30 ist ein Auslaßstutzen 48 befestigt, der am oberen Ende einen radialen Flansch 49 aufweist, welcher an der Unterseite des Gehäuses 30 anliegt und somit die Verbindung zum Gehäuse herstellt. Am unteren Ende des Auslaßstutzens 48 ist ein weiterer radialer Flansch 50 vorgesehen, der zum Befestigen an einer nicht dargestellten Auslaßleitung oder einer sonstigen Auslaßeinrichtung dient.

Der Auslaßstutzen 48 ist in Längsrichtung dehnbar bzw. zusammendrückbar. Zu diesem Zweck enthält er ein Rohrstück 51, dessen oberes Ende 52 an der Innenseite eines rohrförmigen Abschnittes 53 des Auslaßstutzens 48 angeschweißt oder sonstwie befestigt ist, während sein unteres Ende 54 frei bleibt, so daß der untere radiale Flansch 50 gegenüber diesem unteren Ende 54 relativ verschoben werden kann, wie ein Vergleich der linken und rechten Seite der Fig. 3 zeigt.

Um diese relative Verstellung zu ermöglichen, ist der Auslaufstutzen auf seiner Außenseite mit einem in axialer Richtung dehn- und zusammendrückbaren Faltenbalg 55 versehen, der mit dem rohrförmigen Abschnitt 53 einstückig ausgebildet und beispielsweise aus Metallblech geformt ist. Der Faltenbalg 55 ermöglicht es, den Auslaßstutzen 48 an die zwischen der Sicherheitsschließvorrichtung und einem nicht weiter dargestellten Anschluß zur Verfügung stehende Strecke individuell auszunutzen bzw. die Vorrichtung darauf einzustellen.

Wenn der nicht dargestellte Verschluß eines Mischers oder Reaktors, dem die Sicherheitsschließvorrichtung gemäß Fig. 3 und 4 zugeordnet ist, sich in der Schließposition befindet und dementsprechend eine hermetische Abdichtung nach außen gewünscht wird, befindet sich der Verschlußschieber 35 in der im rechten Teil der Fig. 3 gezeigten Position, bei der er eine hermetische Abdichtung am unteren Ende des Rohrabschnittes 27 in Verbindung mit den Dichtungen 36 und 37 herstellt. Das Gehäuse 30 kann dabei so weit angehoben sein, daß die Oberseite des Verschlußschiebers 35 gegen die Unterkante des Rohrabschnittes 27 stößt und somit eine weitere Dichtstelle bildet.

Soll durch die Sicherheitsschließvorrichtung gemäß Fig. 3 und 4 aus dem nicht dargestellten Mischer oder Reaktor Material ausgelassen werden, so wird zunächst der Verschlußschieber 35 in die am weitesten links befindliche Position verschoben, so daß sich die Öffnung 38 nun innerhalb des Auslaßstutzens liegt und damit praktisch bündig mit der inneren Wand 33 der zentralen Öffnung 32 des Gehäuses 30 abschließt. Das Gehäuse 30 kann dann in die in Fig. 3 links und in Fig. 4 dargestellte Position angehoben werden, weil der Rohrabschnitt 27 durch die Öffnung 38 hindurchgeführt werden kann, wie insbesondere Fig. 4 zeigt. Da sich der am unteren Ende des Rohrabschnittes 27 vorgesehene Dichtungsring 29 nunmehr unter dem horizontalen Schlitz 34 des Gehäuses 30 befindet und sich dort gegen die Wand 33 dichtend legt, kann kein durch den Auslaßstutzen entleertes Material zu den Dichtungen 36 und 37 gelangen. Somit werden beim Entleerungsvorgang diese Dichtungen gegen unerwünschte Einwirkung von agressiven oder sonstwie schädigenden Materialien geschützt.

Der Auslaßstutzen 48 kann aufgrund seines Faltenbalges 55 der Aufwärtsbewegung des Gehäuses 30 folgen, wie aus Fig. 3 zu erkennen ist.

## Patentansprüche

1. Sicherheitsschließvorrichtung zum Abdichten von Behälteröffnungen, beispielsweise Ein- oder Auslaßöffnungen von Mischer- oder Reaktorbehältern, mit einem an dem Behälter zu befestigenden rohrförmigen Stutzen (1, 2; 25, 27) und einem nahe dem freien Ende dieses Stutzens einen abdichtenden Verschluß (3; 30), der eine radial zum rohrförmigen Stutzen verschiebbar gelagerte und mit Dichtungen (18, 19; 34, 36) zusammenwirkende Platte aufweist,
**dadurch gekennzeichnet**,
daß die Platte (3; 30) als Schieber ausgebildet ist und für eine hermetische Abdichtung mit der Platte (3; 30) zusammenwirkende Dichtungen (18, 19; 34, 36) vorgesehen sind, wobei die Platte in ihrer zurückgezogenen, außerhalb des Grundrisses des rohrförmigen Stutztens liegenden Stellung, in axialer Richtung des rohrförmigen Stutzens (1, 2; 25, 27) auf der Außenseite desselben verschiebbar gelagert ist.

2. Vorrichtung nach Anspruch 1, dadurch gekennzeichnet, daß der rohrförmige Stutzen (1, 2; 25, 27) am unteren Ende eine mit dem Gehäuse (12; 30) und gegebenenfalls mit der Schieber-Platte (3; 30) zusammenwirkende Dichtung (23; 29) aufweist.

3. Vorrichtung nach Anspruch 1 oder 2, dadurch gekennzeichnet, daß das den Schieberverschluß enthaltende Gehäuse (12; 30) pendelnd aufgehängt ist.

4. Vorrichtung nach einem der Ansprüche 1 bis 3, dadurch gekennzeichnet, daß das Gehäuse (12; 30) über doppelseitig zu beaufschlagende Zylinder (41) pendelnd aufgehängt sind.

5. Vorrichtung nach einem der Ansprüche 1 bis 4, dadurch gekennzeichnet, daß die Platte des Verschlußschiebers (35) eine dem Querschnitt des Stutzens (25, 27) entsprechende Öffnung (38) enthält und in axialer Richtung des Stutzens entlang diesem verschiebbar ist.

6. Vorrichtung nach einem der Ansprüche 1 bis 5, dadurch gekennzeichnet, daß unter dem Verschlußschieber (3; 35) ein Auslaßrohr (5; 51) vorgesehen ist, das dichtend gegen das untere Ende des Stutzens (1, 2; 25, 27) sowie der Platte des Verschlußschiebers anlegbar ist.

## Claims

1. Safety closure device for sealing off container openings, for example inlet and outlet openings of mixer or reactor vessels, with a spigot (1, 2; 25, 27) for attachment to the container and a closure (3; 30) for sealing near the free end of this spigot and having a plate mounted to slide radially with respect to the tubular spigot and co-operating with seals (18, 19; 34, 36),
characterised in that
the plate (3; 30) is formed as a slide and seals (18, 19; 34 36) co-operating with the plate (3; 30) are provided for forming a hermetic seal, the plate in its withdrawn position lying outside the outline of the tubular spigot being mounted to slide in the direction of the axis of the tubular spigot (1, 2; 25, 27) on the outside of the latter.

2. Device according to Claim 1, characterised in that the tubular spigot (1, 2; 25, 27) has on its lower end a seal (23 ; 29) co-operating with the housing (12; 30) and possibly with the slider plate (3; 30).

3. Device according to Claim 1 or 2, characterised in that the housing (12; 30) containing the sliding closure is suspended in a hanging manner.

4. Device according to one of Claims 1 to 3, characterised in that the housing (12; 30) is suspended in a hanging manner through double-acting cylinders (41).

5. Device according to one of Claims 1 to 4, characterised in that the plate of the closure slide (35) contains an opening (38) corresponding to the cross-section of the spigot (25, 27) and is slidable in the direction of the axis of the spigot along the latter.

6. Device according to one of Claims 1 to 5, characterised in that an outlet tube (5; 51) is provided underneath the closure slide (3; 35) and can engage in a sealing manner against the lower end of the spigot (1, 2; 25, 27) as well as the plate of the closure slide.

## Revendications

1. Dispositif de fermeture de sécurité pour assurer l'étanchéité d'orifices de récipient, par exemple d'orifices d'entrée et de sortie de récipients de mélangeur ou de réacteur, comportant une tubulure (1, 2; 25, 27) à fixer au récipient et un obturateur étanche (3; 30) qui est disposé près des extrémités libres de cette tubulure et présente une plaque portée avec liberté de coulisser radialement par rapport à la tubulure et collaborant avec des garnitures d'étanchéité (18, 19; 34, 36),
caractérisé
par le fait que la plaque (3; 30) est conçue en tant que tiroir et que, pour une étanchéité hermétique avec la plaque (3; 30) sont prévues des garnitures d'étanchéité collaborantes (18, 19; 34, 36), dispositif dans lequel la plaque, dans sa position reculée, située en dehors de la projection horizontale de la tubulure, est portée avec possibilité de coulisser selon la direction axiale de la tubulure (1, 2; 25, 27) pour venir sur la face extérieure de cette tubulure.

2. Dispositif selon la revendication 1, caractérisé par le fait qu'à son extrémité inférieure la tubulure (1, 2; 25, 27) présente une garniture d'étanchéité (23; 29) qui collabore avec le carter (12; 30) et éventuellement avec la plaque tiroir (3, 30).

3. Dispositif selon la revendication 1 ou 2, caractérisé par le fait que le carter ( 12; 30) qui contient le tiroir obturateur est suspendu avec possibilité d'osciller.

4. Dispositif selon la revendication 1 à 3, caractérisé par le fait que le carter (12; 30) est suspendu, avec possibilité d'osciller, par l'intermédiaire de vérins à double action (41).

5. Dispositif selon la revendication 1 à 4, caractérisé par le fait que la plaque du tiroir obturateur (35) comporte une ouverture (38) correspondant à la section de la tubulure (25, 27) et qu'elle peut coulisser selon la direction axiale de la tubulure, le long de celle-ci.

6. Dispositif selon la revendication 1 à 5, caractérisé par le fait que sous le tiroir obturateur (3; 35) est prévu un tube de sortie (5; 51) qui peut s'appliquer, avec étanchéité, contre l'extrémité inférieure de la tubulure (1, 2; 25, 27) ainsi que de la plaque du tiroir obturateur.
